# EUROPEAN PATENT SPECIFICATION

(11) **EP 1 722 465 B1**
(45) Date of publication and mention of the grant of the patent: **13.08.2014**
(21) Application number: 06009212.9
(22) Date of filing: 04.05.2006
(51) Int. Cl.: H02K 15/04

(54) **Systems for winding and inserting coils in dynamo electric machine components**
System zum Wickeln und Einziehen von Wicklungen in Komponenten dynamoelektrischer Maschinen
Système de bobinage de d'insertion d'enroulements dans des composants de machines électrodynamiques

(30) Priority: 10.05.2005 IT PI20050048
(43) Date of publication of application: 15.11.2006
(73) Proprietor: ATOP S.p.A., 50021 Barberino Val d'Elsa (Firenze) (IT)
(72) Inventor: Ponzio, Massimo, 50021 Barberino Val D'Elsa (FI) (IT); Stratico, Gianfranco, 53100 Siena (IT); Migliorini, Andrea, 53037 San Gimignano (SI) (IT); Mugelli, Maurizio, 53037 San Gimignano (SI) (IT)
(74) Representative: Celestino, Marco

(56) References cited:
- EP-A1- 0 817 357
- GB-A- 2 069 376
- JP-A- 60 170 446
- US-A- 3 691 606
- US-A- 6 061 899

## Description

### Field of the invention

The present invention relates to a system for manufacturing dynamo-electric components according to the preamble of claim 1. Such a system is known from EP 0817357 A1 and is used for manufacturing wound components of dynamo-electric machines, for example stator cores having coils wound with an electric conductor, such as a copper wire or a copper bar conductor. In particular the present invention concerns optimization of manufacturing having operations like winding to form the coils which are external of the stator core, and successive insertion of the same coils into the stator core.

### Description of the prior art

Normally the two operations of winding the coils and then inserting the same coils into the stator core occur in distinct and specific manufacturing stations, which are located at a certain distance from each other.

More particularly, at the winding station the coils are wound and placed on an insertion tool in predetermined positions. The insertion tool successively guides the coils into the stator core during the insertion operation. The insertion tool usually has a series of guide posts around which the coils are positioned as a result of the winding operation. When accomplishing the insertion operation, the guide posts guide the coils as they are being pushed to become inserted within slots of the stator core that has previously been aligned with the guide posts.

It is therefore necessary that the insertion tool with the coils positioned on it be transferred from the winding station to the insertion station by a transfer system, which is typically a pallet conveyor system or a rotating table solution.

Manufacturing scenarios of this type have been described in US 4,299,025 and EP publication no 817,357

A problem in the manufacturing systems can be that there is inaccuracy in keeping the position of the coils on the insertion tool during the transfer stages of the latter, and that this ultimately produces incorrect positioning of the coils within the dynamo-electric component as a result of the insertion operations. In fact, transfer movements or positioning movements of the insertion tool when the latter is carrying the coils is an essential operational aspect of systems functioning according to the winding and insertion principles. It is crucial for manufacturing quality and avoiding malfunctions of these systems that the coils be located with accuracy on the insertion tool, and in particular that this accuracy be maintained on the insertion tool constantly and until the coils have been successfully inserted within the dynamo-electric component. Therefore, transferring and positioning of the insertion tool that is loaded with coils should occur accurately and without disturbing the conditions of the coils, as they have been produced by the winding operations.

In modern dynamoelectric cores, such as the stator cores of brushless electric motors, stator cores of induction motors, or stator cores of vehicle alternators, the quantity of turns of the coils, or the size of the large bar conductor that need to fill the available slot space is constantly increasing. This augments the requirements of accuracy in positioning and avoiding disturbance to the conditions of the coils during the transfer operations and in preparation for the insertion operations.

Furthermore, the amount of time required for accomplishing the transfer movements or the positioning movements of the insertion tool is particularly important for the manufacturing time of the system, therefore the time required for accomplishing transfer and positioning of the insertion tool needs to be optimized in order to improve the production amounts of dynamo-electric components that can be obtained from the manufacturing system.

The travel routes which the insertion tool needs to accomplish between the various station by the transfer solution influences the disposition of the stations, therefore the layout of machinery on the available floor space of the manufacturing site.

In view of the foregoing, it is an object of this invention to provide manufacturing systems foreseeing winding and insertion stations, in which the production rates of dynamo electric components can be increased without complicating the stations, or without substantially increasing their number.

It is another object of this invention to provide manufacturing systems for dynamo-electric components foreseeing winding and insertion stations, in which the space occupancy of the manufacturing system can be reduced.

It is yet another object of this invention to provide manufacturing systems for dynamo-electric components foreseeing winding and insertion stations, in which the flexibility of disposing the stations within the manufacturing system is increased.

It is still another object of this invention to provide manufacturing systems for dynamo-electric components contemplating winding and insertion stations, in which the accuracy of inserting coils in the dynamo-electric cores can be more constant.

### Summary of the invention

These and other objects of the invention are accomplished in accordance with the principles of the invention by foreseeing a manufacturing systems according to claim 1. In the manufacturing system the winding stations and the insertion stations are disposed in predetermined positions along the extension of a transfer system which is foreseen for supporting and transporting insertion tools. The insertion tools can be either carrying coils to the insertion station or returning empty to the winding station. The transfer solution has a platform with at least a support member for supporting the insertion tools so that the latter can be brought to, or taken away from, the stations

At the stations there can be a loading device for cooperating in the transfer of the insertion tools between the platform and the processing portions of the stations.

During transfer, the platform can become clear of the application tool by relative movement between the platform and the application tool in a direction that is different from the direction for supporting the application tool on the support member.

The support member is provided with a supporting seat for supporting the application tool in the support direction and an opening in the seat for allowing the platform to become clear of the application tool.

### Brief description of the drawings

Further features of the invention, its nature and various advantages will be more apparent from the accompanying drawings and the following detailed description of the preferred embodiments.
- FIG. 1 is a plan view showing a manufacturing system according to a schematic representation of an embodiment of the invention.
- Fig. 1a is an enlargement of a portion of a stator core manufactured with the solutions of the invention, as seen from direction 1a of figure 1
- Fig. 2 is a partial perspective view, as seen from direction 2 of FIG. 1, showing a portion of an embodiment of the transfer system of the present invention. In figure 2 the insertion tool shown in figure 1 has been omitted for reasons of clarity.
- Fig. 3 is a partial perspective view, as seen from direction 3 of figure 2 showing the situation of an insertion tool being carried by the transfer system, however in a different position with respect to figure 1. Certain parts of figure 2 are not present in figure 3 for reasons of clarity. Furthermore, in figure 3 certain parts of the insertion tool are rendered transparent to show the support member of a load device that can be present at a winding station of the manufacturing system.
- Fig. 4 is a partial perspective view, as seen from direction 4 of FIG. 3, showing an insertion tool alone, according to an embodiment of the invention
- Fig. 5 is a perspective view as seen from direction 5 of figure 1 of an embodiment of a load device that can be used at a winding station. For sake of clarity certain parts of figure 1 have been omitted
- Fig. 6 is a perspective view as seen from direction 6 of figure 1 of an embodiment of a load device that can be used at an insertion station. For sake of clarity certain parts of figure 1 have been omitted
- Fig. 7 is a partial section view as seen from directions 7 - 7 of figure 1 showing when an empty insertion tool is aligned at the winding station and ready to be supported by a support member of a load device that can be used at the winding station. In fig. 1, for reasons of clarity the insertion tool has been removed from the position where the direction lines 7 - 7 are positioned.
- Fig. 8 is a partial section view as seen from directions 8 - 8 of figure 1 showing an insertion tool replenished with coils aligned at the insertion station.
- Fig. 9 is a view similar to figure 1 showing a manufacturing system according to a further embodiment.
- Fig. 10 is a view similar to figure 2 as seen from direction 10 of figure 9, however without showing the insertion tool and the station of figure 9 for reasons of clarity.
- Fig. 11 is an elevation view of figures like 1 and 9, although showing a further embodiment of the manufacturing system.
- Fig. 11a is a partial section view as seen from directions 11a - 11a of figure 11.

### Detailed description of the invention

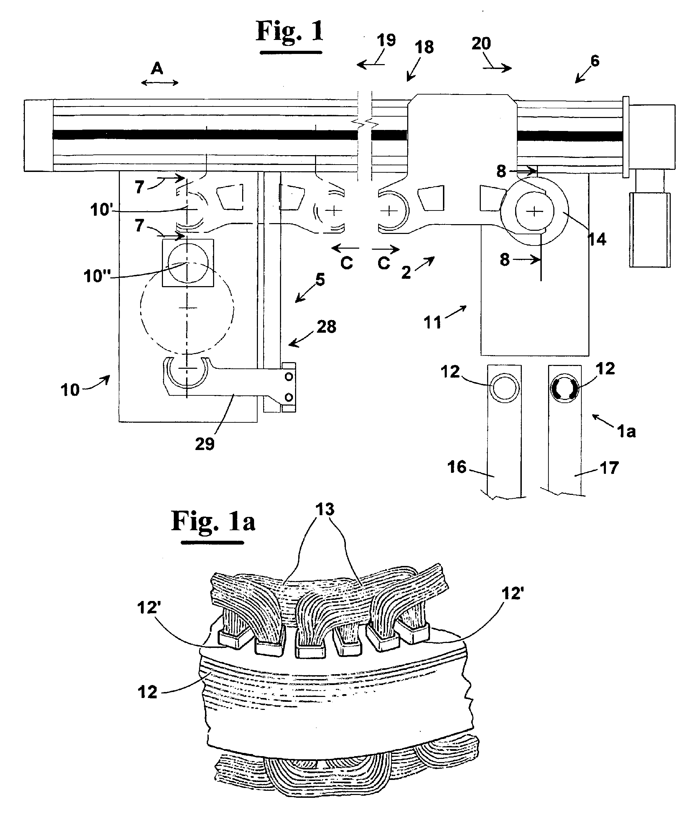

Figure 1 shows a manufacturing system having at least a winding station 10 and an insertion station 11 in which a stator core 12 is processed by completing it with coils 13 (see also figure 1a) inserted in slots 12'. At the winding station 10, coils 13 are produced and placed on insertion tool 14, which is successively transferred to insertion station 11 by transfer solution 18 comprising a moveable platform assembly. In figure 1 the insertion tool 14 is represented schematic and transparent, positioned at insertion station 11.

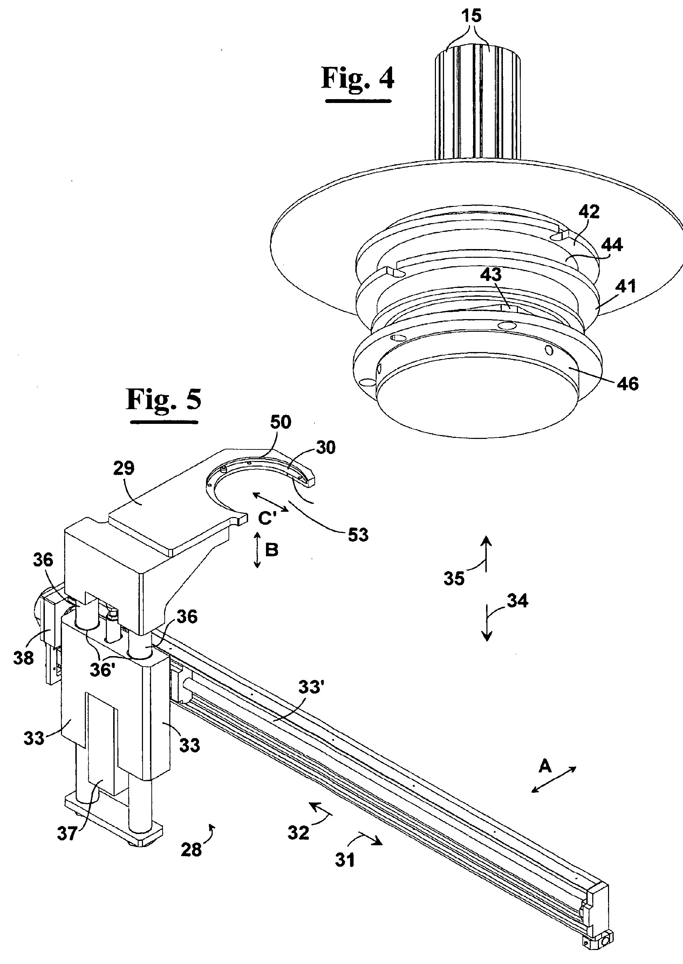

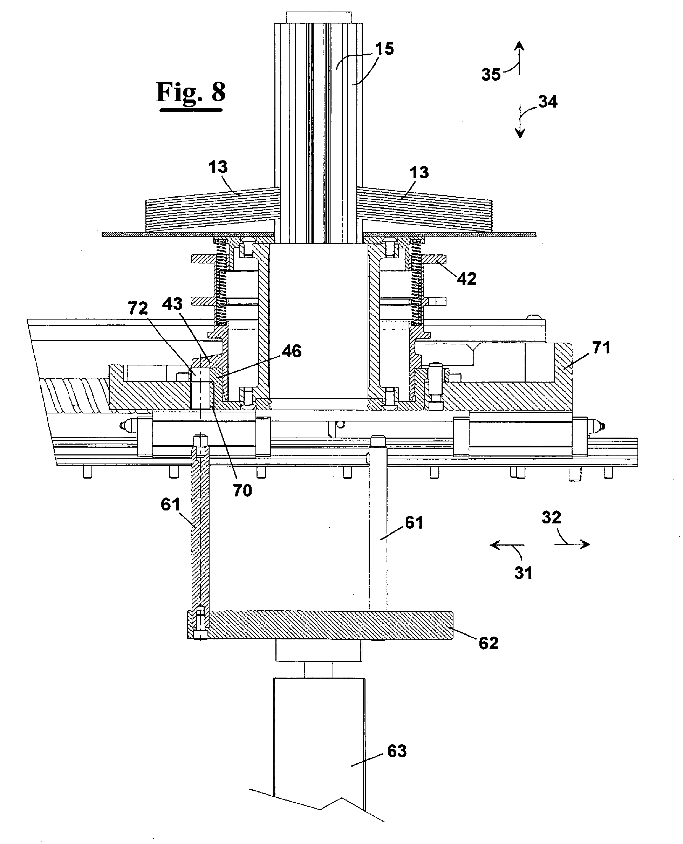

At insertion station 11, coils 13 are removed from the insertion tool and become inserted in stator core 12. Insertion tool 14 is provided with insertion rods 15 (see for example figures 4 and 8), which guide the coils during the insertion operation that occurs at station 11.

Stator cores 12 that need to receive the coils arrive at the insertion station by traveling with transfer solution 18. Finished stator cores 12 that have already received the coils at the insertion station depart by traveling with the same transfer solution 18.

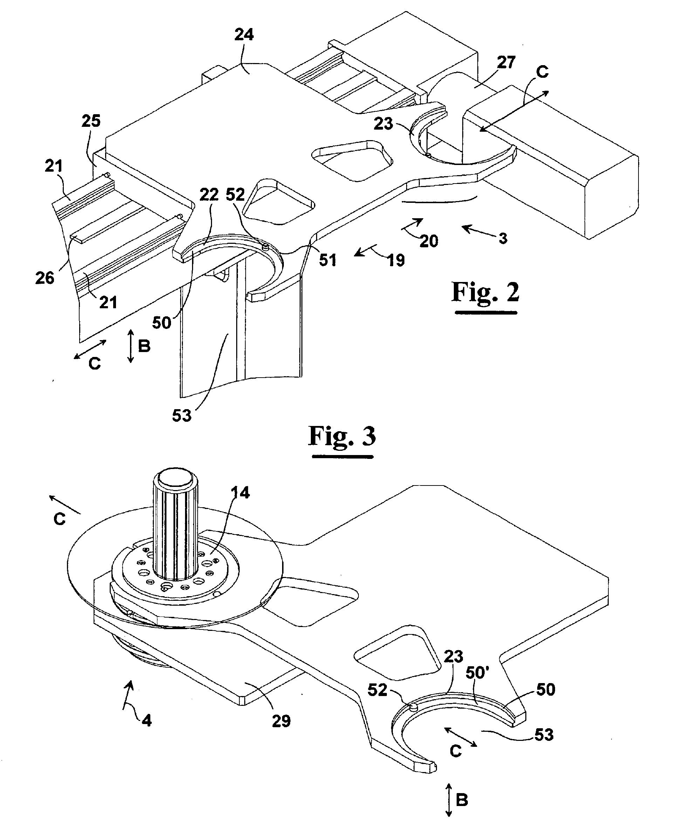

Figures 2 and 3 show details of an embodiment of the transfer solution 18. More particularly, the transfer solution foresees two moveable support portions 22 and 23, each for supporting an insertion tool. The support portions are both on one side of a platform plate 24, which is bolted to a slide base 25. The slide base can translate in directions 19 and 20 by being guided on rail members 21. The translation motions in directions 19 and 20 are imparted to slide base 25 by means of a drive belt 26. Drive belt 26 is connected to slide base 25 and can extend aside the length of rail members 21. Drive belt 26 can be moved in directions 19 and 20 by motor gear unit 27 which ultimately pulls slide base 25 to translate it in either of directions 19 and 20 .

Each of support portions 22 and 23 of platform plate 24 can support an insertion tool like 14 (see also figure 4). In figure 3, insertion tool 14 is shown partially transparent and supported by support portion 22. The transparency is for showing a support member 29 of a load device 28 foreseen at winding station 10.

A manner of operating the manufacturing system can foresee that support portion 22 can be destined to support empty insertion tools, i.e. insertion tools that are returning to winding station 10 after having used them to insert coils in the stator core at insertion station 11. This transfer scenario can be like the situation shown in figure 3. Similarly, support portion 23 can be destined to support insertion tools replenished with coils, i.e. that are carrying coils to insertion station 11, which can be like the situation shown in figure 1 at the insertion station.

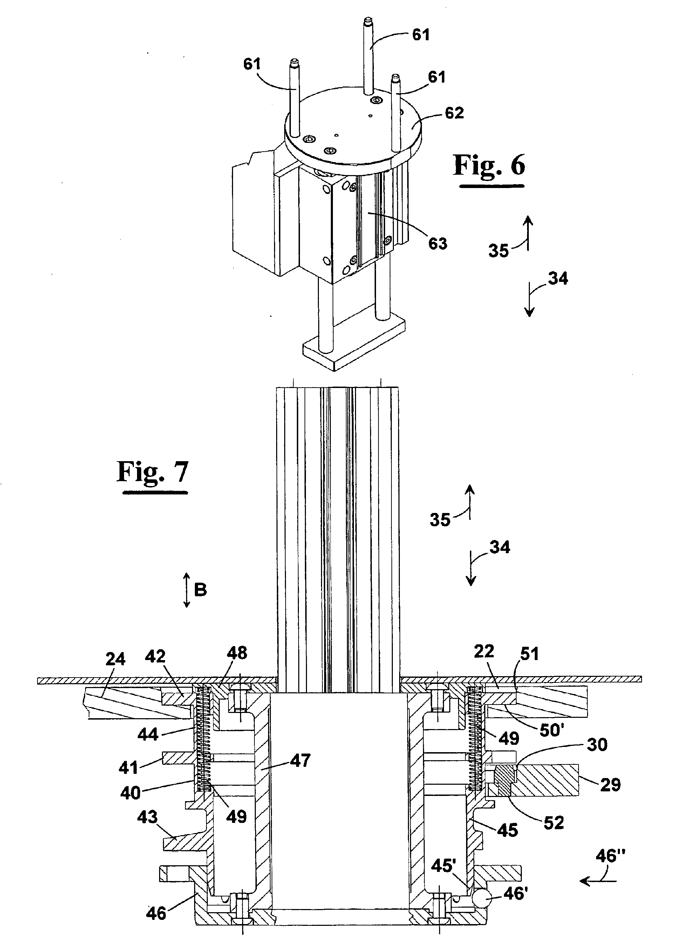

With particular reference to figures 2, 3, 4 and 7, each of support portions 22 and 23 can be configured to have a seat 50, which can be of annular cylindrical configuration having an entrance incline 51 (see also figure 7). Seat 50 is sized to receive a rim portion 42 of insertions tool 14. The rim portion 42 bears and engages on bottom 50' of seat 50 so that the insertion tool results supported by platform plate 24 in direction B. Incline 51 assists entrance of rim portion 42 inside seat 50. Seat 50 can have a pin 52 which can be received in a recess of the insertion tool so as to maintain by engagement the orientation of the insertion tool within seat 50. Seat 50 is open in portion 53, i.e. on one side of seat 50 to allow removal or receiving of the insertion tool in direction C. In other words support portions 22 and 23 can become clear of the insertion tool 14 by relative movement of platform plate 24 in directions C, which are parallel to directions 19 and 20, for situations that are more fully described in the following.

Therefore, platform plate 24 which is carrying an empty insertion tool (like is shown in figure 3) can be moved by translation in direction 19 to be positioned at winding station 10, where the same insertion tool can be replenished with coils.

At winding station 10, support portion 22 with the empty insertion tool can be aligned with support member 29 of load device 28 (shown in figures 1, 3, 5 and 7). The alignment is achieved by stopping translation of platform plate 24 (shown with phantom line representation in figure 1) at location 10', to achieve alignment of support portion 22 with support member 29 of load device 28. To show this alignment, as has already been stated in the foregoing, insertion tool has been removed from the position of support portion 22. After the alignment, load device 28, by using support member 29, can remove the empty insertion tool from support portion 22 and reload support portion 23 with an insertion tool having coils 13 (an insertion tool loaded with coils at the insertion station is shown in figure 8).

Support member 29 of load device 28 has a support portion 30, which has a seat configuration and opening very similar to seats 50 and openings 53 of support portions 22 and 23, respectively, for supporting the insertion tools in direction like B and for receiving and removing the insertion tools in direction like C'. Support member 29 loads an insertion tool onto itself by receiving rim portion like 41 of the insertion tools - (see also figures 3, 5, and 7, and particularly figures 3, and 7, where support member 29 is aligned with the insertion tool in a superimposed manner and ready for receiving the rim portion like 41 in its support portion 30 having seat like 50)

Support member 29 of load device 28 is capable of translating in direction 31 and 32 by being assembled on carriage 33 which can translate on guides 33'. Translations in directions 31 and 32 are practically perpendicular to the general transfer direction A of the manufacturing system occurring along guides 21. Support member 29 can also translate in vertical directions 34 and 35 (see figure 5), i.e. respectively into and out of the page of figure 1, due to its direct assembled on guides 36, which are moveable in bushes 36' of carriage 33. Linear drive 37 which is carried by carriage 33 can be used to drive the translation in directions 34 and 35 of guides 36 for obtaining translations in directions 34 and 35 of member 29, whilst drive 38 can be used to drive the translation in directions 31 ad 32 of carriage 33 for obtaining translations in directions 32 and 31 of member 29.

Figure 3 and 7 show the empty insertion tool, i.e. without coils, as it can be aligned at the winding station, and being supported by portion 22 of platform plate 24 by having rim 42 in seat 50 of portion 22. Furthermore, support member 29 is shown aligned with the insertion tool after having accomplished translation in direction 31 with respect to the position of figures 1 and 5 and by having consequently passed portion 40 of insertion tool 14 through opening 53 of portion 30 of support member 29. Support member 29 is now ready to remove the empty insertion tool from support portion 22. Successively, support member 29 can be raised in direction 35 to come into contact with the underside of rim 41 in order to support insertion tool 14 in the vertical direction like B (see fig. 7). In fact, movement of support member 29 in direction 35 brings rim 41 inside seat like 50 of support member 29 and into contact with bottom 50' of seat 50. Support arm 29 continues by being moved in vertical direction 35 to lift rim 42 in the vertical direction like B thereby bringing rim 42 out of seat like 50 of support portion 22 and at the same time achieving that smaller diameter portion 44 of insertion tool 14 becomes aligned with the open portion like 53 of seat like 50 of support portion 22 to allow support portion 22 to move in directions 20 or C for causing support portion 22 to become clear of insertion tool 14, therefore to clear the insertions tool in directions like 20 or C with respect to platform plate 24.

As an alternative it should be contemplated that support member 29 may having a further movement assembly for causing it to move in directions opposite to 20 or C, when it is supporting insertion tool 14 like has been described above, to achieve that support portion 22 becomes clear of insertion tool 14. Successively, support member 29 of the load device can be moved in direction 32 to bring the insertion tool into alignment with a cylindrical seat 10" (see figure 1) of the winding position. When alignment with the cylindrical seat 10" is reached, support member 29 can be moved downwards in direction 34 to deposit the insertion tool in the cylindrical seat 10" of the winding position.

With respect to insertion tool 14, rims 41, 42, 43 can be configured like portions of flange structures (see figure 7)and together with portion 44 and 40 can be portions of cylindrical member 45, which is an assembled part that forms insertion tool 14 (see also figure 4 and 8). Furthermore, cylindrical member 45 is moveable in vertical directions 34 and 35 with respect to central member 47 by mounting cylindrical member 45 so that it can slide on collar member 48. Collar member 48 is fixed to central member 47. Collar member 48 supports insertion rods 15. Springs 49 assembled between collar member 48 and cylindrical member 45 are preloaded to normally push cylindrical member 45 in direction 34, i.e. downwards. Portion 46 of cylindrical member 45 can be received for example in the cylindrical seat 10" of the winding station and in a similar seat 70 of the insertion station (see figure 8 for the cylindrical seat of the insertion station). Ball 46' can enter and engage within corresponding recesses (not shown) of the cylindrical seats for locking the insertion tool therein. End 45' of cylindrical member 45 can engage ball 46' to maintain ball 46' engaged within the recesses. Springs 49, when pushing cylindrical member 45 in direction 35 cause end 45' to push on ball 46' to maintain it engaged within the recesses.

In figure 7 the insertion tool is being supported solely by seat 50 of support portion 22. In this condition the weight of central member 47 causes collar member 48 to abut against the upper surface of rim 42. As a result, end 45' is kept in a position which is that of not forcing ball 46' outwards for engagement in the recesses of the cylindrical seats. This condition is required when for example support member 29 is moved downwards in direction 34 to fit portion 46 of the insertion tool in the cylindrical seats without interference. In fact, ball 46' is free to retract in direction 46" , when portion 46 is sliding into the cylindrical seats. Continuing, the underside of portion 46 will bear on the bottom of the cylindrical seats and support member 29 will continue to descend in direction 34. Then, member 45 will be moved downwards with respect to central member 47 by springs 49 so that end 45' engages ball 46' to force it into engagement in an aligned recess of the cylindrical seats. This will stop any further movement of cylindrical member 45, and will thus allow rim 41 to move out of a support portion like 30 of support member 29. This is also due to an extra descent in direction 34 accomplished by support member 29 when cylindrical member 45 has become stationary.

Successively, support member 29 can move clear of the insertion tool by translating in direction 32 or C', which causes portion 44 of the insertion tool to pass though open side 53 of support portion 30 belonging to support member 29.

Once the required coils have been formed and placed on the insertion tool, support member 29 can reload the same insertion tool back onto platform plate 24 by accomplishing in a reverse sequence the operations that have been described in the foregoing.

A sequence of operations for exchanging insertion tools between the winding station and platform plate 24, can foresee that before removing an empty tool present on the support base in support portion 22, a replenished tool is loaded in support portion 23 by first aligning support portion 23 with support member 29 at the winding station. Once the replenished tool has been loaded in support portion 23, the empty insertion tool can be removed from support portion 22 in the manner that has been described in the foregoing.

Figure 1 can be showing a replenished insertion tool in support portion 23 and aligned at the insertion station 11, after having been transferred from the winding station by moving support plate in direction 20. In this condition of alignment, support portion 23 is aligned with lifting rods 61 of load device 60, which is typically located at the insertion station 11 (see also figures 6 and 8). Lifting rods 61 are upright extensions fixed to plate 62 which can be moved in directions 34 and 35 by actuator 63. When the insertion tool is aligned at the insertion station, movement of plate 62 in direction 34 brings the upper ends of the lifting rods into contact with the underside of rim portions 43 of the insertion tool in order to lift rim portion 42 out of seat 50 of support portion 23. Once this has occurred, platform assembly 18 can be moved in direction 19 in order to cause support portion 23 to become clear of insertion tool 14 by passing narrow portion 44 through opening 53. Successively, lifting rods 61 can be lowered in direction 34 to place the insertion tool 14 in an aligned cylindrical seat 70 of slide member 71 (see this condition in figure 8). Bores like 72 are present in cylindrical seat 70 for allowing passage of lifting rods 61 through cylindrical seat 70. Thereafter, slide member 71 can be translated in direction 32 to align the insertion tool in the insertion position where the coils become inserted in the slots of the stator core.

An opposite sequence of operations on behalf of slide member 71 and lifting rods 61 can be performed involving movements in directions 31 and 35 to remove the empty insertion tool from the insertion station and reload it in a portion 22 of platform plate 24 by passing narrow portion 44 through opening 53.

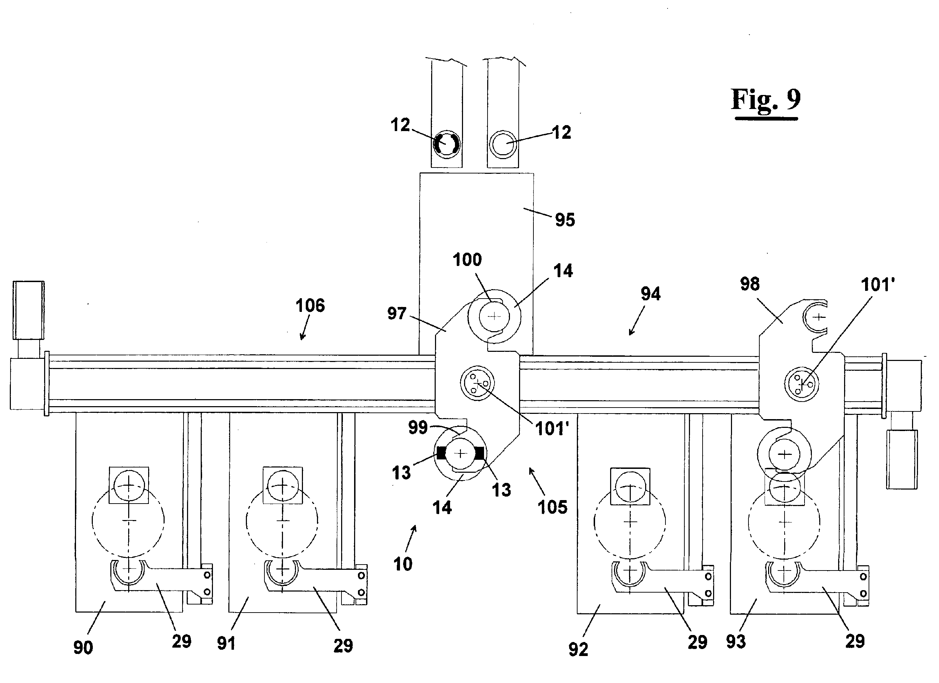

Figure 9 shows a manufacturing system having four winding stations 90, 91, 92, 93 (like winding station 10 of figure 1) located on one side of transfer solution 94. An insertion station 95 (like insertion station 11 of figure 1) can be foreseen between the winding stations and on the other side of transfer solution 94. Empty and replenished insertion tools 14 (like 14 described in the foregoing) can be transferred between the winding station and the insertion station by means of moveable platform plates 97 and 98. More precisely, platform plate 97 transfers insertions tools between winding stations 90, 91 and insertion station 95, whilst platform plate 98 transfers insertion tools between winding stations 92, 93 and insertion station 95.

This configuration of the manufacturing system can achieve a higher production of the dynamoelectric components due to the presence of multiple platform plates 97 and 98 for transferring the insertion tools while the multiple winding stations that can be working in parallel. Only one insertion station has been shown in the assumption that it is capable of processing the output of the four winding stations and that platform plates 97 and 98 can be employed in receiving, removing or transferring insertions tools simultaneously, i.e. operating in parallel and synchronized or unsynchronized with respect to each other.

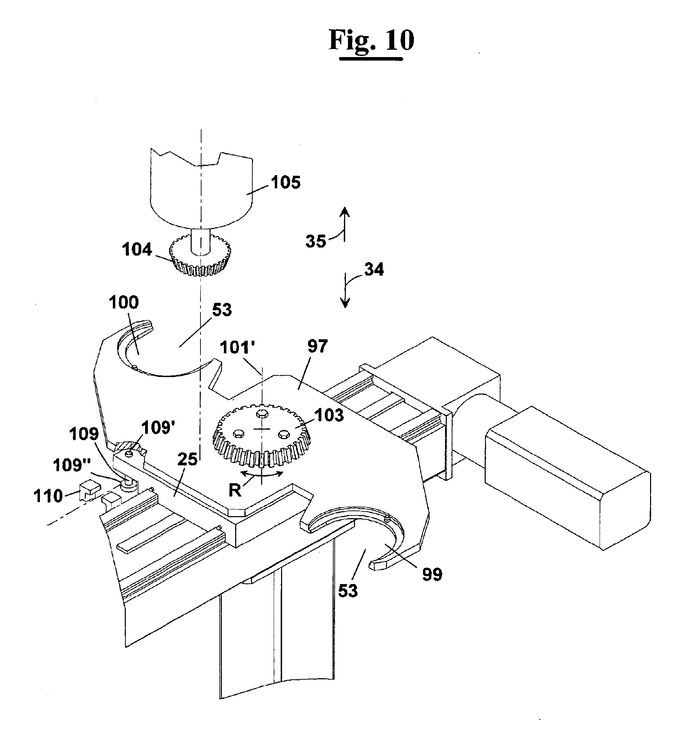

Figure 10 shows more in detail that platform plate 97 or 98 can have two support portions 99, 100 which are similar to support portions 22 and 23 described in the foregoing. In figure 10 support portions 99, 100 are on opposite sides of the platform plate with openings 53 facing opposite directions. Platform plates 97 and 98 can be mounted on respective slide bases like slide base 25 of the foregoing, although with the difference that platform plates 97 and 98 are rotatably mounted on the slide bases like 25 - i.e. capable of rotation R around respective axes 101' of respective axles (hidden by gears 103). More particularly, each of the axles is integral with the respective platform plates 97 and 98 and is mounted to rotate on the respective slide base like 25 that is below.

Gears 103 are integral with the heads of the axles or bolted to support plates 97 and 98 (as shown in figure 10), so that rotations R can be imparted by drive gears 104. Drive gears 104 are driven by respective motor units 105. Drive gears 104 and motor units 105 can be present at the stations to engage gears 103 if rotations R are required. Drive gears 104 can translate in directions 34 and 35, respectively to engage and disengage gears 103.

Support plates 97 and 98 can be locked to the slide bases like 25 to avoid any unwanted rotations R around axes 101'. A releasable locking pin 109 can be foreseen on the slide bases like 25 for engaging aligned recesses of the support plates 97 and 98 when locking to avoid rotations R is required. In figure 10 the recess is removed due to the cut out made in plate 97 to show the end 109' of pin 109. The locking action of pin 109 can be released by a fork type actuating device 110 (shown partially in figure 10), which can translate in directions 34 and 35 to be able to engage and disengage head 109" of pin 109. Therefore, actuating device 110 can be present at the stations to cause the locking and unlocking actions of pin 109 depending on whether rotations of the support plates are required. Typically, the locking action of pin 109 is required when the support plates are moved between the stations.

Rotation R of the support plates can be for 180° around axes 101' in order to exchange position of support portions 99 and 100. Consequently, and as an example, support portion 100 can be destined for carrying empty support portions to the winding stations, whilst support portion 99 can be destined for carrying replenished insertion tools from the winding stations to the insertion station. At the winding station, or at the insertion station, the support plates can be rotated to exchange the position of the support portions 99 and 100 to follow sequences of loading the insertion tools, which are similar to those described in the foregoing for figure 1 with reference to support portions 22 and 23. For example, considering arrival of support plates 97 or 98 at the insertion station with a replenished tool carried in support portion 99 positioned on side 105 and with support portion 100 empty on side 106 (see figure 9) - first, support portion 100 is loaded with an empty insertion tool that has been used in the insertion station, then the support plate can be rotated by engaging gear with drive gear 104 to bring support portion 99 with the replenished insertion tool in alignment for loading into the insertion station 95, then the replenished insertion tool can be loaded into the insertion station 95 for inserting the coils into the stator core.

Similar operations requiring exchange of the positions of support portions 99 and 100 can be performed at the winding stations 90 - 93 to deliver an empty insertion tool and to receive a further replenished insertion tool.

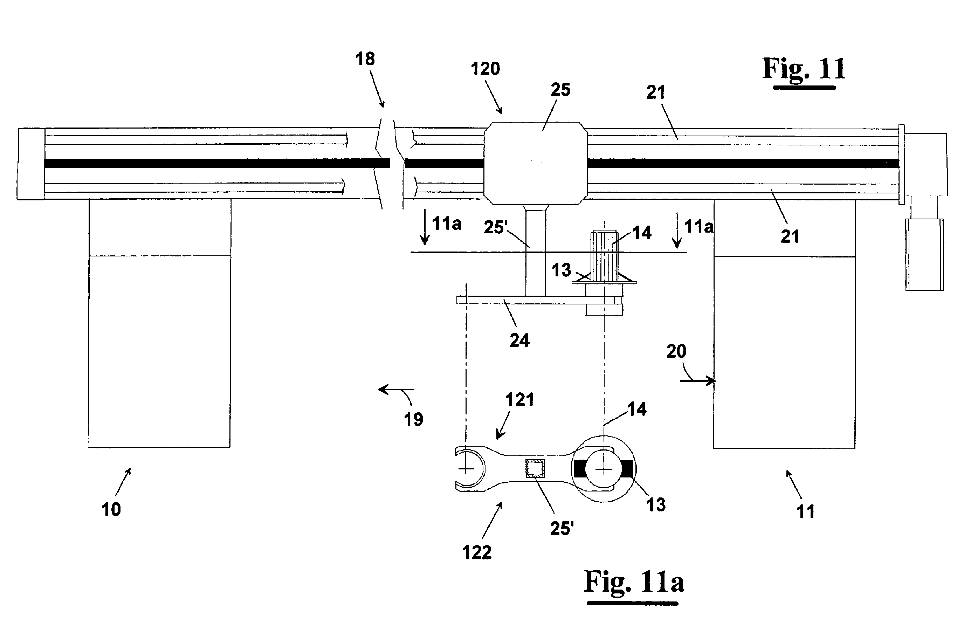

Figures 11 and 11a show an embodiment in which slide base 25 is moveable in an overhead area 120 with respect to where platform plate 24 translates in directions 19 and 20. More particularly, rail members 21 are placed overhead for guiding slide base 25. Pillar structure 25' can be used for suspending platform plate 24 from slide base 25. Support portion 23 is shown carrying insertion tool 14 replenished with coils. In the embodiment of figure 11 and 11a support portions 22, 23 are free to be accessed on both sides 121 and 122 on behalf of load devices or other operators of the stations. Consequently, the stations can be on either of the sides 121 and 122 of the transfer solution 18 shown in figures 11 and 11a.

By employing the systems described in the foregoing the speeds for moving the insertion tools between the stations can be increased due to the use of a low number of moveable parts in the transfer devices, and also due to the simplicity of the moveable parts. This implies low inertias of the moving parts, therefore the possibility of controlling deceleration and acceleration of the insertion tools in a sufficiently smooth manner, which ultimately allows the positional stability of the coils to be maintained even at high speeds.

Furthermore, according to the systems described in the foregoing, the winding and insertions stations can be positioned in a variety of layout positions, therefore a notable flexibility in configuring system layouts is achieved.

Portions 22 and 23, 99 and 100 can allow loading and unloading of the insertion tools by means of primary motions that are substantially horizontal. This tends to avoid jolting of the coils that would otherwise occur if the primary motions are vertical

It will be understood that the foregoing is only illustrative of the principles of this invention, and that various modifications can be made by those skilled in the art without departing from the scope and spirit of the invention. For example, platform plate 24 has been shown with two support portions 22, 23, a single support portion or a higher number of support portions may be similarly employed. Although platform plate 24 has been foreseen with a rectilinear trajectory accomplished with translation motions to move between the stations, other trajectories and motions may be used, for example circular trajectories and rotational motion.

## Claims

1. A system for manufacturing dynamo-electric components (12) comprising:
- at least a winding station (10) for winding coils (13) that need to be applied to the dynamo electric components; wherein the coils are transferred to an application tool (14) configured for applying the coils to the dynamo-electric components;
- at least a further station (11) for applying the coils to the dynamo electric components by using the application tool provided with the coils;
- a transfer device (18) for transferring the application tool with the coils at least between the winding station and the further station, the transfer device further comprising a platform (24) that is moveable between the winding station (10) and the further station (11) in a transfer direction (A, 19, 20); wherein
the platform (24) comprises at least a first support member (22) for supporting the application tool along a support direction (B) during transfer of the application tool and for allowing the platform (24) to become clear of the application tool (14) by relative movement between the platform and the application tool in a direction (C) that is different from the support direction (B);
**characterized in that** the support member (22) is provided with a supporting seat (50) for supporting the application tool (14) in direction (B) and an opening (53) in the seat for allowing the platform (24) to become clear of the application tool (14).

2. The system of claim 1 wherein the opening (53) is oriented in the transfer direction (A, 19, 20).

3. The system of claim 2 wherein the platform moves the support member (22) of the platform in the transfer direction (A, 19, 20) for allowing the platform (24) to become clear of the application tool (14).

4. The system of claim 1 wherein a further support member (29) is located at least at one of the stations for supporting and transferring the application tools between the platform (24) and the stations (10, 11); wherein the further support member (29) is provided with a supporting seat (50) for supporting the application tool(14) in the support direction (B) and an opening (53) in the seat for allowing the further support member (29) to become clear of the application tool (14).

5. The system of claim 4 wherein the opening (53) of the further support member (29) is oriented perpendicularly to the transfer direction (A, 19, 20)

6. The system of claim 1 wherein the platform (24) comprises a second support member (23), wherein one of the support members (23) supports the application tool (14) carrying coils (13) and the other support member (22) supports application tools (14) without coils.

7. The system of claim 1 wherein the support member (22) is positioned on the platform (24) to one side of where the platform is supported for moving between the stations (10, 11).

8. The system of claim 7 wherein the platform (24) comprises a second support member (23), wherein the second support member (23) is positioned on the platform on the same side of the first support member (22) with respect to where the platform is supported for moving between the stations (10, 11).

9. The system of claim 7 wherein the platform (97, 98) comprises a second support member (100), wherein the second support member is positioned on the platform on an opposite side with respect to the first support member (99) and to where the platform is supported for moving between the stations (90, 95).

10. The system of claim 1 wherein a further support member (29, 61) is located at a station for engaging the application tool (14) in order to remove the application tool from the platform (24); wherein the application tool is provided with at least two distinct engaging sites (41, 42, 43); wherein the first support member (22) engages the application tool at a first (42) of the engaging sites; and wherein the further support member (29, 61) engages the application tool 14 at the second (41, 43) of the engaging sites at the station.

11. The system of claim 10 wherein the engaging sites (41, 42, 43) of the application tool (14) are portions of flange structures

12. The system of claim 10 wherein the further support member (29) at a station is assembled on a slide (36) capable of moving in the support direction (B) for removing the application tool (14) from the platform.

13. The system of claim 10 wherein the further support member (61) moves through a further platform (71) for engaging the application tool; wherein the further platform receives the application tool for aligning the application tool with the dynamo-electric component (12) to apply the coils (13) to the dynamo-electric component.

14. The system of claim 10 wherein the further support member (29, 61) and the first support member (22) become superimposed in the support direction (B) to remove the application tool from the platform.

15. The system of claim 1 wherein the first support member (22) is carried by a platform (97) that is rotatably mounted on a platform assembly of the transfer device; wherein means (104, 105) are foreseen at the stations for rotating the platform.

16. The system of claim 1 wherein the stations (10, 11) are disposed on two sides of the transfer device (18).

17. The system of claim 1 wherein all the stations (10, 11) of the system are disposed on one side of the transfer device (18).

18. The system of claim 1 wherein the platform (24) is supported for movement in the transfer direction by guiding structure that is above the first support member (22) in the support direction (B); and wherein the support member (22) is configured to be below the platform in the support direction (B)

## Patentansprüche

1. Ein System für die Herstellung von dynamo-elektrischen Komponenten (12) umfassend:
- wenigstens eine Wickelstation (10) zum Wickeln von Spulen (13), welche auf dynamo-elektrische Komponenten aufgebracht werden müssen; wobei die Spulen auf ein Auftragswerkzeug (14) transferiert werden, welches für das Aufbringen der Spulen auf die dynamo-elektrischen Komponenten konfiguriert ist;
- wenigstens eine weitere Station (11) zum Aufbringen der Spulen auf die dynamo-elektrischen Komponenten unter Verwendung des Auftragswerkzeugs, welches mit den Spulen versehen ist;
- eine Transfervorrichtung (18) für den Transfer des Auftragswerkzeugs mit den Spulen zwischen mindestens der Wickelstation und der weiteren Station, wobei die Transfervorrichtung weiter eine Plattform (24) umfasst, welche in eine Transferrichtung (A, 19, 20) bewegbar zwischen der Wickelstationen (10) und der weiteren Station (11) ist; wobei
die Plattform (24) wenigstens ein Tragelement (22) aufweist zur Stützung des Auftragswerkzeugs entlang einer Tragrichtung (B) während des Transfers des Auftragswerkzeugs und zum Ermöglichen, dass die Plattform (24) von dem Auftragswerkzeug (14) mittels einer relativen Bewegung zwischen der Plattform und dem Auftragswerkzeug in eine Richtung (C), welche sich von der Tragrichtung (B) unterscheidet, freigegeben wird;
**dadurch gekennzeichnet, dass**
das Tragelement (22) mit einem tragendem Sitz (50) versehen ist zum Tragen des Auftragswerkzeugs (14) in die Tragrichtung (B) und mit einer Öffnung (53) in dem Sitz, um zu ermöglichen, dass die Plattform (24) von dem Auftragswerkzeug (14) freigegeben wird.

2. Das System nach Anspruch 1, wobei die Öffnung (53) in die Transferrichtung (A, 19, 20) ausgerichtet ist.

3. Das System nach Anspruch 2, wobei die Plattform das Tragelement (22) der Plattform in die Transferrichtung (A, 19, 20) bewegt, um die Plattform (24) von dem Auftragswerkzeug (14) freizugeben.

4. Das System nach Anspruch 1, wobei ein weiteres Tragelement (29) an wenigstens einer der Stationen für das Tragen und den Transfer des Auftragswerkzeugs zwischen der Plattform (24) und den Stationen (10, 11) positioniert ist; wobei das weitere Tragelement (29) mit einem tragendem Sitz (50) versehen ist zum Tragen des Auftragswerkzeugs (14) in der Tragrichtung (B) und mit einer Öffnung (53) in dem Sitz, um zu ermöglichen, dass das weitere Tragelement (29) freigegeben wird von dem Auftragswerkzeug (14).

5. Das System nach Anspruch 4, wobei die Öffnung (53) des weiteren Tragelements (29) rechtwinklig zur Transferrichtung (A, 19, 20) ausgerichtet ist.

6. Das System nach Anspruch 1, wobei die Plattform (24) ein zweites Tragelement (23) umfasst, wobei eines der Tragelemente (23) das Auftragswerkzeug (14) trägt, welches die Spulen (13) trägt, und das andere Tragelement (22) die Auftragswerkzeuge (14) ohne Spulen trägt.

7. Das System gemäss Anspruch 1, wobei das Tragelement (22) auf der Plattform (24) gegen eine Seite positioniert ist, an welcher die Plattform (24) zur Bewegung zwischen den Stationen (10, 11) getragen ist.

8. Das System nach Anspruch 7, wobei die Plattform (24) ein zweites Tragelement (23) umfasst, wobei das zweite Tragelement (23) an der gleichen Seite der Plattform positioniert ist wie das erste Tragelement (22) mit Bezug auf wo die Plattform zum Bewegen zwischen den Stationen (10, 11) getragen ist.

9. Das System nach Anspruch 7, wobei die Plattform (97, 98) ein zweites Tragelement (100) umfasst, wobei das zweite Tragelement an der Plattform mit Bezug auf das erste Tragelement (99) an einer gegenüberliegenden Seite positioniert ist und mit Bezug auf wo die Plattform zum Bewegen zwischen den Stationen (90, 95) getragen ist.

10. Das Systems nach Anspruch 1, wobei ein weiteres Tragelement (29, 61) an einer Station zum Angreifen des Auftragswerkzeugs (14) angeordnet ist, um das Auftragswerkzeug von der Plattform (24) zu entfernen; wobei das Auftragswerkzeug mit wenigstens zwei unterschiedlichen Angriffsbereichen (41, 42, 43) bereitgestellt ist; wobei das erste Tragelement (22) am Auftragswerkzeug an einem ersten (42) Griffbereich angreift; und wobei das weitere Tragelement (29, 61) am Auftragswerkzeug (14) an einem zweiten (41, 43) Angriffsbereich der Station angreift.

11. Das System nach Anspruch 10, wobei die Angriffsbereiche (41, 42, 43) des Auftragswerkzeugs (14) Teile von Flanschstrukturen sind.

12. Das System nach Anspruch 10, wobei das weitere Tragelement (29) an einer Station auf einem Schlitten (36) angeordnet ist, welcher sich zum Entfernen des Auftragswerkzeugs (14) von der Plattform in die Tragrichtung (B) bewegen kann.

13. Das System nach Anspruch 10, wobei sich das weitere Tragelement (61) durch eine weitere Plattform (71) zum Angreifen des Auftragswerkzeug bewegt, wobei die weitere Plattform das Auftragswerkzeug zur Ausrichtung des Auftragswerkzeug mit der dynamo-elektrischen Komponente (12) aufnimmt, um die Spulen (13) auf die dynamo-elektrische Komponente aufzubringen.

14. Das System nach Anspruch 10, wobei das weitere Tragelement (29, 61) und das erste Tragelement (22) in der ersten Lagerrichtung (B) überlagert werden, um das Auftragswerkzeug von der Plattform zu entfernen.

15. Das System nach Anspruch 1, wobei das erste Tragelement (22) von einer Plattform (97) getragen ist, welche rotierbar an einer Plattformanordnung der Transfervorrichtung angebracht ist; wobei Mittel (104, 105) an den Stationen zum Rotieren der Plattform vorgesehen sind.

16. Das System nach Anspruch 1, wobei die Stationen (10, 11) an zwei Seiten der Transfervorrichtung (18) angeordnet sind.

17. Das System nach Anspruch 1, wobei alle Stationen (10, 11) des Systems an einer Seite der Transfervorrichtung (18) angeordnet sind.

18. Das System nach Anspruch 1, wobei die Plattform (24) für die Bewegung in die Transferrichtung durch eine Führungsstruktur getragen wird, welche sich oberhalb des ersten Tragelements (22) in der Tragrichtung (B) befindet; und wobei das Tragelement (22) derart konfiguriert ist, dass sich das Lagerelement (22) unterhalb der Plattform in der Tragrichtung (B) befindet.

## Revendications

1. Système de fabrication de composants électrodynamiques (12) comprenant :
au moins une station de bobinage (10) pour bobiner des bobines (13) à appliquer sur les composants électrodynamiques ; dans lequel les bobines sont transférées à un outil d'application (14) conçu pour appliquer les bobines sur les composants électrodynamiques ;
au moins une autre station (11) pour appliquer les bobines aux composants électrodynamiques en utilisant l'outil d'application pourvu des bobines ;
un dispositif de transfert (18) pour transférer l'outil d'application avec les bobines au moins entre la station de bobinage et l'autre station, le dispositif de transfert comprenant en outre une plate-forme (24) qui est mobile entre la station de bobinage (10) et l'autre station (11) dans une direction de transfert (A, 19, 20) ; dans lequel
la plate-forme (24) comprend au moins un premier élément de support (22) pour supporter l'outil d'application le long d'une direction de support (B) pendant le transfert de l'outil d'application et pour permettre à la plate-forme (24) de se dégager de l'outil d'application (14) par un mouvement relatif entre la plate-forme et l'outil d'application dans une direction (C) qui est différente de la direction de support (B) ;
**caractérisé en ce que** l'élément de support (22) comprend un siège de support (50) pour supporter l'outil d'application (14) dans la direction (B) et une ouverture (53) dans le siège pour permettre à la plate-forme (24) de se dégager de l'outil d'application (14).

2. Système selon la revendication 1, dans lequel l'ouverture (53) est orientée dans la direction de transfert (A, 19, 20).

3. Système selon la revendication 2, dans lequel la plate-forme déplace l'élément de support (22) de la plate-forme dans la direction de transfert (A, 19, 20) pour permettre à la plate-forme (24) de se dégager de l'outil d'application (14).

4. Système selon la revendication 1, dans lequel un élément de support supplémentaire (29) est situé au moins à l'une des stations pour supporter et transférer les outils d'application entre la plate-forme (24) et les stations (10, 11) ; dans lequel l'élément de support supplémentaire (29) comprend un siège de support (50) pour supporter l'outil d'application (14) dans la direction de support (B) et une ouverture (53) dans le siège pour permettre à l'élément de support supplémentaire (29) de se dégager de l'outil d'application (14).

5. Système selon la revendication 4, dans lequel l'ouverture (53) de l'élément de support supplémentaire (29) est orientée perpendiculairement à la direction de transfert (A, 19, 20).

6. Système selon la revendication 1, dans lequel la plate-forme (24) comprend un second élément de support (23), dans lequel l'un des éléments de support (23) supporte l'outil d'application (14) portant des bobines (13) et l'élément de support supplémentaire (22) supporte des outils d'application (14) sans bobine.

7. Système selon la revendication 1, dans lequel l'élément de support (22) est positionné sur la plate-forme (24) sur un côté de l'endroit où la plate-forme est supportée pour se déplacer entre les stations (10, 11).

8. Système selon la revendication 7, dans lequel la plate-forme (24) comprend un second élément de support (23), dans lequel le second élément de support (23) est positionné sur la plate-forme sur le même côté du premier élément de support (22) par rapport à l'endroit où la plate-forme est supportée pour se déplacer entre les stations (10,11).

9. Système selon la revendication 7, dans lequel la plate-forme (97, 98) comprend un second élément de support (100), dans lequel le second élément de support est positionné sur la plate-forme sur un côté opposé par rapport au premier élément de support (99) et à l'endroit où la plate-forme est supportée pour se déplacer entre les stations (90, 95).

10. Système selon la revendication 1, dans lequel un élément de support supplémentaire (29, 61) est situé au niveau d'une station pour mettre en prise l'outil d'application (14) pour retirer l'outil d'application de la plate-forme (24) ; dans lequel l'outil d'application comprend au moins deux sites de mise en prise distincts (41, 42, 43) ; dans lequel le premier élément de support (22) met en prise l'outil d'application au niveau d'un premier (42) des sites de mise en prise ; et dans lequel l'élément de support supplémentaire (29, 61) met en prise l'outil d'application 14 au niveau du second (41, 43) des sites de mise en prise au niveau de la station.

11. Système selon la revendication 10, dans lequel les sites de mise en prise (41, 42, 43) de l'outil d'application (14) sont des parties de structures de bride.

12. Système selon la revendication 10, dans lequel l'élément de support supplémentaire (29) au niveau d'une station est assemblé sur un coulisseau (36) pouvant se déplacer dans la direction de support (B) pour retirer l'outil d'application (14) de la plate-forme.

13. Système selon la revendication 10, dans lequel l'élément de support supplémentaire (61) se déplace à travers une autre plate-forme (71) pour mettre en prise l'outil d'application ; dans lequel la plate-forme supplémentaire reçoit l'outil d'application pour aligner l'outil d'application avec le composant électrodynamique (12) pour appliquer les bobines (13) sur le composant électrodynamique.

14. Système selon la revendication 10, dans lequel l'élément de support supplémentaire (29, 61) et le premier élément de support (22) sont superposés dans la direction de support (B) pour retirer l'outil d'application de la plate-forme.

15. Système selon la revendication 1, dans lequel le premier élément de support (22) est porté par une plate-forme (97) qui est montée en rotation sur un ensemble de plate-forme du dispositif de transfert ; dans lequel des moyens (104, 105) sont prévus au niveau des stations pour faire tourner la plate-forme.

16. Système selon la revendication 1, dans lequel les stations (10, 11) sont disposées sur deux côtés du dispositif de transfert (18).

17. Système selon la revendication 1, dans lequel toutes les stations (10, 11) du système sont disposées sur un côté du dispositif de transfert (18).

18. Système selon la revendication 1, dans lequel la plate-forme (24) est supportée pour se déplacer dans la direction de transfert par la structure de guidage qui se trouve au-dessus du premier élément de support (22) dans la direction de support (B) ; et dans lequel l'élément de support (22) est conçu pour être en dessous de la plate-forme dans la direction de support (B).
